(19) Europäisches Patentamt

European Patent Office

Office européen des brevets

(11) **EP 1 592 157 B1**

(12) # EUROPEAN PATENT SPECIFICATION

(45) Date of publication and mention
of the grant of the patent:
**29.06.2016 Bulletin 2016/26**

(51) Int Cl.:
*H04J 11/00* *(2006.01)*

(21) Application number: **05252370.1**

(22) Date of filing: **15.04.2005**

(54) **Methods and apparatus for code division multiple access communication using code book that provides reduced peak-to-average power ratio**

Verfahren und Vorrichtung für CDMA Systeme mit einem Codebuch, das ein verringerte Verhältnis von Spitzen- zu Durchschnittsleistung aufweist

Procédés et dispositif pour communications AMRC avec un livre de code qui réduise le rapport entre puissance de crête et puissance moyenne

(84) Designated Contracting States:
**DE FR GB**

(30) Priority: **29.04.2004 US 835085**

(43) Date of publication of application:
**02.11.2005 Bulletin 2005/44**

(73) Proprietor: **ALCATEL LUCENT**
**92100 Boulogne-Billancourt (FR)**

(72) Inventors:
• **Ashikhmin, Alexei**
**Morristown, NJ 07960 (US)**
• **Liu, Jung-Tao**
**Madison, Morris   New Jersey 07940 (US)**

(74) Representative: **Knecht, Ulrich Karl**
**Alcatel Lucent**
**Intellectual Property & Standards**
**70430 Stuttgart (DE)**

(56) References cited:
**EP-A- 1 359 678     US-B1- 6 680 978**

• **OTTOSSON T: "PRECODING FOR MINIMIZATION OF ENVELOPE VARATIONS IN MULTICODE DS-CDMA SYSTEMS" WIRELESS PERSONAL COMMUNICATIONS, KLUWER ACADEMIC PUBLISHERS, NL, vol. 13, no. 1/2, May 2000 (2000-05), pages 57-77, XP000894159 ISSN: 0929-6212**
• **MURPHY C D: "High-order optimum hexagonal constellations" PERSONAL, INDOOR AND MOBILE RADIO COMMUNICATIONS, 2000. PIMRC 2000. THE 11TH IEEE INTERNATIONAL SYMPOSIUM ON SEPT. 18-21, 2000, PISCATAWAY, NJ, USA,IEEE, vol. 1, 18 September 2000 (2000-09-18), pages 143-146, XP010520620 ISBN: 0-7803-6463-5**
• **SATHANANTHAN K ET AL: "Peak-to-average power ratio analysis in multicode cdma" VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY : IEEE, US, vol. VOL. 1 OF 4. CONF. 56, 24 September 2002 (2002-09-24), pages 500-504, XP010608607 ISBN: 0-7803-7467-3**

**Description**

**Field of the Invention**

The present invention relates to code division multiple access (CDMA) communication systems and, more particularly, to direct sequence CDMA (DS-CDMA) systems having reduced peak-to-average power ratios (PAPRs).

**Background of the Invention**

CDMA techniques transmit multiple information signals on the same channel, and differentiate each user sub-channel by encoding it with a unique spreading code. Originally, CDMA networks were designed to carry only voice traffic and exhibited limited data rate variability. CDMA networks, however, are evolving to encompass a variety of applications, each requiring potentially different data rates or quality of service needs. A CDMA system that employs four spreading codes is said to have a "spreading factor" of four and can transmit four distinct streams of data.

The output of a given CDMA transmitter is generally the sum, $\underline{s}$, of each data stream multiplied by the corresponding spreading code. In a system having a spreading factor of four, there are 16 possible output vectors, $\underline{s}$. It can be shown that the peak-to-average p ower ratio of such a C DMA system is the maximum value over each possible output vector, $\underline{s}$, of the peak energy divided by the average energy. If the peak-to-average power ratio of a CDMA system is greater than one then it is obvious that power of different signals vary. Thus, when the output vector, $\underline{s}$, is amplified prior to transmission by a non-linear amplifier, which are commonly found in communications devices, the transmitted signal will be amplified differently for each possible output vector, $\underline{s}$, creating non-linear distortion.

United States Patent No. 6,680,978 describes a technique for reducing the peak-to-power in communication systems with precoder filtering. The disclosed techniques for reducing the peak-to-average power ratio are not applicable in the CDMA environment of the present invention. C.D. Murphy, "High Order Optimum Hexagonal Constellations," 11th Annual IEEE Symposium on Personal, Indoor and Mobile Radio Communications (PIMRC) 2000 (Sept., 2000) suggests the use of several different types of families of signals in high-rate digital communication systems. European patent application EP 1359678(A1) discloses a code allocation method for a CDMA system.

A need therefore exists for a CDMA system that provides a reduced peak to average power ratio.

US 6,680,978 B1 describes a prefiltering concept for transmitters. This concept uses a feedback loop. Data symbols d(n) are input to this feedback loop and combined with a filtered feedback signal f(n) to obtain an input signal a(n) for a modulo device. An output signal m(n) of the modulo device is input to a PAR controller which generates an accumulator signal S(n). The accumulator signal S(n) is compared against thresholds $\pm$THs. Depending on that comparison a precoded signal p(n) is generated which either corresponds to the input signal m(n) or p(n)=m(n) $\pm$ 2N, N denoting some modulo boundary. The precoded signal p(n) is then fed back to a precoder filter to obtain the filtered feedback signal f(n).

MURPHY C. D., "High-order optimum hexagonal constellations", PERSONAL, INDOOR AND MOBILE RADIO COMMUNICATIONS, 2000. PIMRC 2000. THE 11TH IEEE INTERNATIONAL SYMPOSIUM ON SEPT. 18-21, 2000, PISCATAWAY, NJ, USA, IEEE, (20000918), vol. 1, PAGE 143 - 146 compares hexagonal signal constellations against their QAM counterparts for PAR reduction.

EP 1 359 678 A1 describes allocating predefined spreading codes with low PAR to users with high path losses and spreading codes with higher PAR to users with lower path losses:

US 2002/0150068 A1 describes to employ a weighted majority logic to efficiently multiplex a plurality of M signal codes $C_1(k)$, $C_2(k)$, ..., $C_M(k)$ into a constant-envelope composite signal C for transmission. The majority logic multiplexing technique may be used in a CDMA communication system transmitting multiple CDMA signals to a single location or to a group of spatially dispersed users. These signals are subject to direct sequence (DS) spread spectrum modulation using pseudo-noise (PN) codes and have a common, synchronous chip rate and carrier frequency. Weighting of the signal codes $C_1(k)$, $C_2(k)$, ..., $C_M(k)$ is done In accordance with respective target gains $G_1$, $G_2$, ..., $G_M$.

SATHANANTHAN K. ET AL, "Peak-to-average power ratio analysis in multicode cdma", VTC 2002-FALL 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY, IEEE, US, (20020924), VOL 1 OF 4. CONF. 56, PAGE 500 - 504, describe reducing the PAR of a multi-code CDMA signal employing a Walsh-Hadamard Transform (WHT) of input data. The WHT output signal sequence is a multilevel signal. Before transmission the WHT output signal is spread by a spreading sequence. In order to reduce the PAR, Sathananthan K. et al. suggest partitioning an input data block into M disjoint subblocks which are weighted, respectively, and combined. By optimizing the respective weighting factors $b_m$ the PAR can be reduced.

## Summary of the Invention

Generally, according to the independent claims, a method and apparatus are provided for generating a code book for use in a CDMA system. The code book comprises of a plurality of vectors that are used to encode user data. According to one aspect of the invention, the amplitude and polarity for each vector in the code book are selected to provide a reduced peak-to-average power ratio. The amplitude values can be selected to provide a reduced peak-to-average power ratio while maintaining a desired average energy per chip. The desired energy per chip can be based on the energy per chip of a CDMA system having a lower order spreading factor.

In one exemplary implementation, a CDMA system has a spreading factor of eight for communicating eight distinct data streams. One or more of the data streams can be reserved to maintain a desired data rate, such as a data rate of a CDMA system with a spreading factor of four. The exemplary code book employs vectors having amplitude values that provide a significant reduction in the peak-to-average power ratio, relative to a frequently deployed conventional CDMA system having a spreading factor of four. In a further variation, performance can be further improved by employing a first code book under a first signal-to-noise ratio condition and a second code book under a second signal-to-noise ratio condition.

From the system point of view, a CDMA transmitter incorporating features of the present invention comprises a plurality of multipliers that multiply an encoded data stream by a corresponding spreading code. The encoded data stream is based on a code book comprised of a plurality of vectors, each of the vectors having non-uniform amplitude values selected to provide a reduced peak-to-average power ratio, in accordance with the present invention.

A more complete understanding of the present invention, as well as further features and advantages of the present invention, will be obtained by reference to the following detailed description and drawings.

## Brief Description of the Drawings

FIG. 1 illustrates a conventional DS-CDMA system;
FIG. 2 illustrates an exemplary code book that can be employed by the DS-CDMA system of FIG. 1'
FIG. 3 illustrates a DS-CDMA system incorporating features of the present invention;
FIG. 4 is a flow chart describing an exemplary implementation of a code book generation process;
FIG. 5 is a plot illustrating the relative decoding performance (bit error probability versus signal-to-noise ratio) of the conventional DS-CDMA system of FIG. 1 and the DS-CDMA system of FIG. 3, in the presence of an additive white Gaussian noisy (AWGN) channel; and
FIG. 6 is a flow chart describing an exemplary implementation of a decoding process.

## Detailed Description

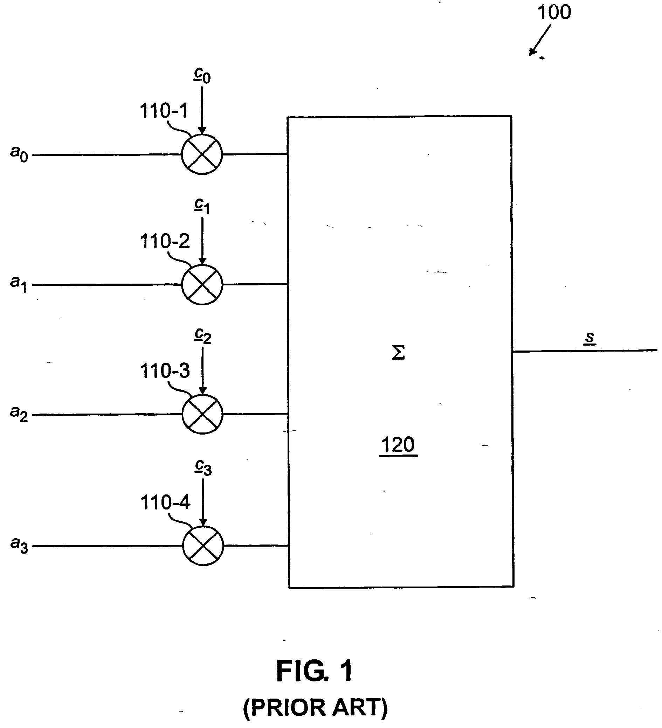

FIG. 1 illustrates a conventional DS-CDMA system 100 with a spreading factor (SF) of four (4). The conventional DS-CDMA system 100 is used, for example, in mobile telephones. For a detailed discussion of exemplary DS-CDMA systems 100, see, for example, T. Ottosson, "Precoding for Minimization of Envelope Variations in Multicode DS-CDMA Systems," Wireless Personal Communications, 13, 57-78 (2000).

The conventional DS-CDMA system 100 shown in FIG. 1 is used for simultaneous transmission of four streams of information, $a_0$, $a_1$, $a_2$ and $a_3$, that carry information of streams 0, 1, 2, and 3, respectively. Variables $a_0$, $a_1$, $a_2$ and $a_3$ form the vector a = $(a_0, a_1, a_2, a_3)$. The vector $\underline{s}$ is referred to as the output vector that is applied to a communications channel. The vectors $\underline{c}_0$, $\underline{c}_1$, $\underline{c}_2$ and $\underline{c}_3$ are spreading sequences. Generally, each information stream $a_0$, $a_1$, $a_2$ and $a_3$ is multiplied by a corresponding spreading sequence, $\underline{c}_0$, $\underline{c}_1$, $\underline{c}_2$ and $\underline{c}_3$, respectively, by corresponding multipliers 110-1 through 110-4, and the spread signals are combined at stage 120 prior to application to the channel.

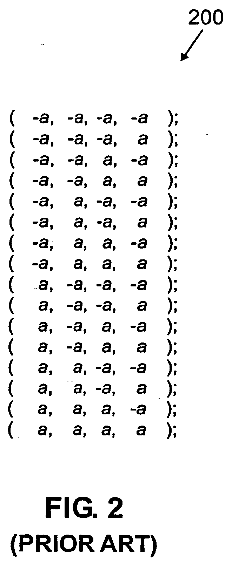

FIG. 2 illustrates an exemplary code book A 200 that can be employed by the DS-CDMA system 100 of FIG. 1. Thus, the vectors $\underline{a}$ form the code book $A$ of FIG. 2. The information bit from the $i$th information stream is encoded into the sign of the $i$th entry of a vector a. The logical zeroes (0s) correspond to positive entries of a vector $\underline{a}$ and logical ones (1s) correspond to negative entries. For example, in order to transmit logical zero in the 0th and 3rd information streams and logical one in the 1 st and 2 nd streams, the vector $\underline{a}$ = $(a,-a,-a,a)$ is transmitted. The value $a$ is the amplitude of transmitted signals. Typically, the amplitudes of each of the four streams of information, $a_0$, $a_1$, $a_2$ and $a_3$, is the same. In some implementations of the conventional DS-CDMA system 100, the amplitude of one or more of the four streams of information, $a_0$, $a_1$, $a_2$ and $a_3$, may be increased to provide a corresponding increase in energy (and thus protection) of the stream. For example, the amplitude of stream $a_0$, which may be associated with a pilot signal, may be increased to improve the channel estimation.

The vectors $\underline{c}_0$, $\underline{c}_1$, $\underline{c}_2$, $\underline{c}_3$ are spreading sequences assigned to corresponding information streams.

The spreading sequences $\underline{c}_0, \underline{c}_1, \underline{c}_2, \underline{c}_3$ are defined as follows:

$$\underline{c}_0 = (\ 1, \quad 1, \quad 1, \quad 1),$$

$$\underline{c}_1 = (\ 1, \quad -1, \quad 1, \quad -1),$$

$$\underline{c}_2 = (\ 1, \quad 1, \quad -1, \quad -1),$$

$$\underline{c}_3 = (\ 1, \quad -1, \quad -1, \quad 1).$$

**[0020]** - It can be seen that these sequences form rows of the well-known Hadamard matrix $H_4$ of dimension four (see, e.g., F.J. MacWilliams and N.J.A. Sloane, The Theory of Error-Correcting Codes, North-Holland (1977)), as follows:

$$H_4 = \begin{bmatrix} 1, & 1, & 1, & 1 \\ 1, & -1, & 1, & -1 \\ 1, & 1, & -1, & -1 \\ 1, & -1, & -1, & 1 \end{bmatrix},$$

and therefore they are orthogonal. In other words

$$\underline{c}_i \cdot \underline{c}_j = \begin{cases} 4, & \text{if} \quad i = j; \\ 0, & \text{if} \quad i \neq j; \end{cases} \tag{1}$$

where the multiplication is the inner product of two vectors defined by the following rule:

$$(x_0, x_1, \ldots, x_{n-1}) \cdot (y_1, y_2, \ldots, y_{n-1}) = x_0 y_0 + x_1 y_1 + \ldots x_{n-1} y_{n-1}.$$

For example,

$$\underline{c}_1 \cdot \underline{c}_2 = (1, -1, 1-1) \cdot (1, 1, -1, -1) = 1 - 1 - 1 + 1 = 0,$$

but

$$\underline{c}_1 \cdot \underline{c}_1 = (1, -1, 1-1) \cdot (1, -1, 1, -1) = 1 + 1 + 1 + 1 = 4.$$

The output vector $\underline{s} = (s_0, s_1, s_2, s_3)$, which is later modulated and then transmitted into the channel, is computed as follows:

$$\underline{s} = \underline{a} \cdot H_4 = a_0 \underline{c}_0 + a_1 \underline{c}_1 + a_2 \underline{c}_2 + a_3 \underline{c}_3.$$

The multiplication operation $a_i \underline{c}_i$ occupies four chips of time. Therefore, in any DS-CDMA system, such as the DS-CDMA system 100 of FIG. 1, with the spreading factor four, v ariables $a_0, a_1, a_2$ and $a_3$ can change their values not faster than every four consecutive chips.

Thus, the DS-CDMA system 100 is a system in which the variables $a_1, a_2, a_3$ take new values every four chips, and the variable $a_0$ takes a new value only every $m$ chips, where $m$ is an integer divisible by 8. It is assumed that the 0th stream plays a special role in the system 100. For example, the 0th stream of a mobile telephone can be used for transmitting voice, while other streams can be used for transmitting data. The voice changes significantly slower compared to data and therefore $a_0$ has to take a new value only every $i$ consecutive chips. Another common and important case is when the 0th stream is used for transmitting a pilot signal. The pilot signal usually remains constant for a long time interval, typically 256 chips, that allows the decoder to accurately estimate the channel fading coefficient.

The rate of a DS-CDMA system 100 is defined as the average number of information bits transmitted per chip. It is easy to see that the DS-CDMA system 100 has the following rate:

$$R_A = \frac{3\frac{m}{4}+1}{m}. \tag{2}$$

Decoding

During transmission through an exemplary channel, the vector $\underline{s}$ is corrupted by additive noise and the vector $\underline{x} = \underline{s} + \underline{z}$ is received, where $\underline{z}$ is a vector of noise. To recover a value of $a_i$, a despreading procedure is used, which consists of multiplying the received vector $\underline{x}$ by the vector $\underline{c}_i$ :

$$h_i = \underline{x} \cdot \underline{c}_i = (\underline{s} + \underline{z}) \cdot \underline{c}_i = (a_0\underline{c}_0 + a_1\underline{c}_1 + a_2\underline{c}_2 + a_3\underline{c}_3) \cdot \underline{c}_i + \underline{z}\underline{c}_i. \tag{3}$$

Taking into account the orthogonality property of equation (1), the following is obtained:

$$h_i = 4a_i + \underline{z} \cdot \underline{c}_i.$$

Finally, the sign of $h_i$ is computed and the original bit is reconstructed as $\hat{a}_i = sign(h_i)a$. If the channel noise is not very strong, in other words, if entries of the vector $\underline{z}$ are small numbers, then with a large probability the quantity $|\underline{z} \cdot \underline{c}_i|$ will be smaller than $|4a_i|$. Therefore, $h_i$ will have the same sign as $a_i$, and hence $\hat{a}_i$ will be equal to $a_i$.

For example, without loss of generality it can be assumed that $a=1$. Let $\underline{a}=(1, -1, 1, 1)$ and $\underline{z}=(2.1, -1.8, -1.85, -1.75)$. Then, $\underline{s}=(2, 2, -2, 2)$ and $\underline{h}=(2.1, -1.8, -1.85, -1.75)$. Computing, for instance, $h_1$ according to equation (3), $h_1$ equal to -3.3 and $\hat{a}_1, = a_1$ are obtained.

Since the variable $a_0$ changes its value only every $m$ chips and since it is spread with the help of the sequence $\underline{c}_0 = (1,1,1,1)$, the value of $a_0$ is reconstructed using a different rule. $\underline{x}^{(i)}$, $i=1,...,m/4$ denotes vectors received from the channel after transmitting $m$ chips. $\underline{z}^{(i)}, i=1,...,m/4$ denotes the corresponding noisy vectors. To determine the value $a_0$, compute:

$$h_0 = \sum_{i=1}^{m/4} \underline{x}^{(i)} \cdot \underline{c}_0 = \sum_{i=1}^{m/4}\sum_{j=0}^{3} \underline{x}_j^{(i)} = ma + \sum_{i=1}^{m/4}\sum_{j=0}^{3} \underline{z}_j^{(i)},$$

and reconstruct $\hat{a}_0 = sign(h_0)a$. It can be shown that the probability of decoding error, defined below, is significantly lower for $a_0$ compared to other values of $a_i$.

The bit error probability of a DS-CDMA system, such as the DS-CDMA system 100, is defined as follows

$$\Pr(\hat{a}_i \neq a_i) = \Pr(\text{sign}(\hat{a}_i) \neq \text{sign}(a_i)).$$

PAPR of the DS-CDMA system 100

The energy of a vector of signals $\underline{x} = (x_0, x_1...., x_{n-1})$ is defined as $x_0^2 + x_1^2 + ... + x_{n-1}^2$.

Hence, the average energy per chip of an output vector $\underline{s}$ equals:

$$E_{av}(\underline{s}) = \frac{1}{4}(s_0^2 + s_1^2 + s_2^2 + s_3^2).$$

The average energy per chip for the system is defined as the value $E(\underline{s})$ averaged over all 16 possible vectors s corresponding to vectors from code book $A$ , shown in FIG. 2.

$$E_A = \frac{1}{16}\sum_{\underline{s}} E_{av}(s). \qquad (4)$$

The peak energy of $\underline{s}$ is defined as

$$E_{peak}(\underline{s}) = \max_{0 \le i \le 3}\{s_i^2\}. \qquad (5)$$

The peak to average power ratio of the DS-CDMA system 100 equals:

$$PAPR_A = \max_{\underline{s}} \frac{E_{peak}(\underline{s})}{E_A}. \qquad (6)$$

Thus, the peak to average power ratio will vary. For non-linear amplifiers, which are commonly found in communications devices, such as mobile telephones, different components of the transmitted signal will be amplified differently, creating non-linear distortion. A need therefore exists for a DS-CDMA system that provides a reduced peak to average power ratio.
Let $H_n$ be an $n$ dimensional Hadamard matrix and $\underline{y}=(y_0,...,y_{n-1})$ be a real vector and $\underline{v} = \underline{y}H_n$. The Parseval rule (see, e.g., F.J. MacWilliams and N.J.A. Sloane, The Theory of Error-Correcting Codes, Chapter 14.3, Corollary 3) relates the energy of the vector $\underline{y}$, which equals

$$E(\underline{y}) = y_0^2 + ... + y_{n-1}^2,$$

to the energy of the vector $\underline{v}, E(\underline{v}) = v_0^2 + ... + v_{n-1}^2$, by the following equality:

$$E(\underline{v}) = nE(\underline{y}). \qquad (7)$$

If a vector $\underline{a} = (a_0,a_1,a_2,a_3)$ is transmitted, then according to the Parseval rule (equation (7)), the corresponding output vector $\underline{s}$ will have the following average energy per chip:

$$E_{av}(\underline{s}) = \frac{1}{4}(s_0^2 + s_1^2 + s_2^2 + s_3^2) = \frac{1}{4}4(a_0^2 + a_1^2 + a_2^2 + a_3^2) = 4a^2. \qquad (8)$$

Thus, according to equation (4):

$$E_A = 4a^2. \qquad (9)$$

The PAPR of the DS-CDMA system 100 is now estimated. It can be shown that half of the output vectors $\underline{s}=(s_0, s_1, s_2, s_3)$ have the property that three variables of $s_0, s_1, s_2, s_3$ are zeros and one variable has the absolute value $|4a^2|$. For instance, if $\underline{a} = (a, a, - a, - a)$ then the corresponding output vector has the form $\underline{s} = (0, 0, 4a, 0)$. The second half of the output vectors have the property that all $s_0, s_1, s_2, s_3$ variables have the same absolute value $|2a|$. For instance, if $a = (a,-a, a, a)$ then $\underline{s}=(2a, 2a, - 2a, 2a)$ . Therefore, according to equations (6), (5), and (9), the peak to average power ratio of the DS-CDMA system 100 can be expressed as follows:

$$PAPR_A = \frac{(4a)^2}{4a^2} = 4.$$

Improved DS-CDMA System

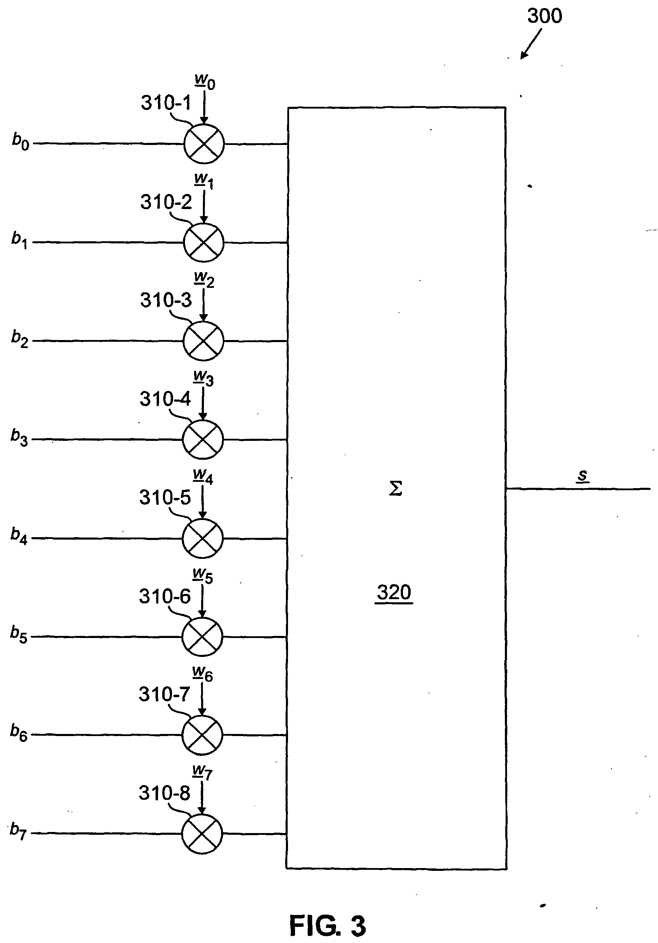

FIG. 3 illustrates a DS-CDMA system 300 incorporating features of the present invention. The exemplary DS-CDMA system 300 provides a spreading factor $SF = 8$, with a reduced peak to average power ratio and bit error probability, relative to the conventional DS-CDMA system 100. In various implementations, the DS-CDMA system 300 can have the same (i) rate, (ii) average energy per chip and (iii) amplitude, $a$, of signals transmitted in the 0th stream as the conventional DS-CDMA system 100. In this manner, the rate of the conventional system is maintained without increasing the average power p er c hip. I n addition, the p ower for signals transmitted in the 0th stream is not changed, thereby resulting in the same bit error probability. Since the 0th stream plays a special role in the system it can be important to maintain the bit error probability for the 0th stream, relative to the DS-CDMA system 100. For example, if the 0th stream is used for sending a pilot signal and the amplitude of the signal is reduced, this will result in a less accurate estimate of the channel fading coefficients, which, in turn, leads to failure to decode other streams of information.

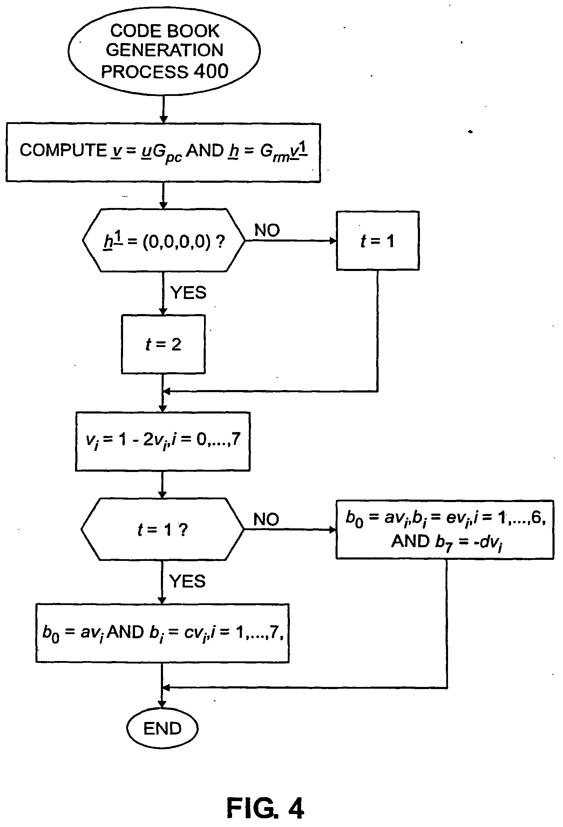

Vectors $\underline{b}=(b_0, b_1, b_2, b_3, b_4, b_5, b_6, b_7)$ are taken from the code book, defined below in conjunction with FIG. 4. In the exemplary implementation, only streams 0,1,..., 6 carry information and stream 7 plays an auxiliary role. The signs (polarities) of the variables $b_0,...,b_6$ represent values of transmitted bits, in a similar manner to the DS-CDMA system 100. For example, positive entries can correspond to logical 0 and negative entries can correspond to logical 1. The absolute values $|b_0|,...,|b_7|$ represent signal amplitudes of transmitted signals. In the DS-CDMA system 300 of the present invention, different amplitudes and polarities are chosen for signals from different streams (such that a desired average energy, $E_A$, is maintained).

The spreading sequences $\underline{w}_0,\underline{w}_1,...,\underline{w}_7$ can be expressed as follows:

$$\underline{w}_0 = (1,\quad 1,\quad 1,\quad 1,\quad 1,\quad 1,\quad 1,\quad 1,);$$

$$\underline{w}_1 = (1,\quad -1,\quad 1,\quad -1,\quad 1,\quad -1,\quad 1,\quad -1,);$$

$$\underline{w}_2 = (1,\quad 1,\quad -1,\quad -1,\quad 1,\quad 1,\quad -1,\quad -1,);$$

$$\underline{w}_3 = (1,\quad -1,\quad -1,\quad 1,\quad 1,\quad -1,\quad -1,\quad 1,);$$

$$\underline{w}_4 = (1,\quad 1,\quad 1,\quad 1,\quad -1,\quad -1,\quad -1,\quad -1,);$$

$$\underline{w}_5 = (1,\quad -1,\quad 1,\quad -1,\quad -1,\quad 1,\quad -1,\quad 1,);$$

$$\underline{w}_6 = (1,\quad 1,\quad -1,\quad -1,\quad -1,\quad -1,\quad 1,\quad 1,);$$

$$\underline{w}_7 = (1,\quad -1,\quad -1,\quad 1,\quad -1,\quad 1,\quad 1,\quad -1,).$$

The sequences $\underline{w}_0,\underline{w}_1,...,\underline{w}_7$ form rows of the Hadamard matrix $H_8$ of dimension eight (8) and therefore they are orthogonal. The variables $b_1,...,b_6$ take new values every eight chips and the variable $b_0$ takes a new value every $m$ chips. It is noted that during a time interval of 8 chips, the conventional DS-CDMA system 100 can transmit 6 bits (over two cycles). Thus, in order to transmit 6 bits with the DS-CDMA system 300 in the same time interval of 8 chips, only six user streams are needed. According to one aspect of the invention, the seventh user stream can be used to maintain performance (e.g., to improve the PAPR). Thus, during $m$ chips the DS-CDMA system 300 will transmit $6\frac{m}{8}+1$ bits of information and therefore the rate of the DS-CDMA system 300 equals the rate of the conventional DS-CDMA system 100:

$$R_B = \frac{\frac{6}{8}m+1}{m} = \frac{\frac{3}{4}m+1}{m} = R_A.$$

To be able to transmit seven streams of information, a code book of size $2^7$ is needed. Instead of defining a code book for the DS-CDMA system 300 explicitly, the code book is defined using an algorithm. The matrices $G_{pc}$ and $G_{rm}$ are defined as follows:

$$G_{pc} = \begin{bmatrix} 1 & 1 & 1 & 1 & 1 & 1 & 1 & 1 \\ 0 & 1 & 0 & 1 & 0 & 1 & 0 & 1 \\ 0 & 0 & 1 & 1 & 0 & 0 & 1 & 1 \\ 0 & 0 & 0 & 0 & 1 & 1 & 1 & 1 \\ 0 & 0 & 0 & 0 & 1 & 0 & 0 & 1 \\ 0 & 0 & 0 & 0 & 0 & 1 & 0 & 1 \\ 0 & 0 & 0 & 0 & 0 & 0 & 1 & 1 \end{bmatrix},$$

$$G_{rm} = \begin{bmatrix} 1 & 1 & 1 & 1 & 1 & 1 & 1 & 1 \\ 0 & 1 & 0 & 1 & 0 & 1 & 0 & 1 \\ 0 & 0 & 1 & 1 & 0 & 0 & 1 & 1 \\ 0 & 0 & 0 & 0 & 1 & 1 & 1 & 1 \end{bmatrix}.$$

The matrices $G_{pc}$ and $G_{rm}$ are generator matrices of the single parity check code and the first order Reed-Muller code of length 8 (see, e.g. F. J. MacWilliams and N. J. Sloane, The theory of Error-Correcting Codes, North-Holland (1977)). They define properties of a code book $\beta$.

Let $a$ be the signal amplitude used in the conventional DS-CDMA system 100 and $c$, $e$ and $d$ be signal amplitudes for the DS-CDMA system 300 of the p resent invention. Let a binary vector $\underline{u} = (u_0, u_1,..., u_6)$ take all $2^7 = 128$ possible values from (0, 0,..., 0) to (1, 1,...,1). For each vector $\underline{u}$, the corresponding vector $\underline{b}$ is defined according to the following code book generation process 400, shown in FIG. 4:

    1. Compute $\underline{v} = \underline{u}G_{pc}$
    2. *Compute* $\underline{h} = G_{rm}\underline{v}^\perp$ (here $\perp$ indicates the vector transposition);
    3. If $\underline{h}^\perp = (0,0,0,0)$ then assign $t = 2$, else assign $t = 1$;
    4. Let $v_i = 1-2v_i, i=0,...,7$;
    5. Form the vector $b$ as follows. If $t = 1$ then assign $b_0 = av_0$ and $b_i = cv_i, i = 1,...,7,$, else assign $b_0 = av_0, b_i = ev_i, i =1,...,6$, and $b_7 =-dv_7$.

Vectors $\underline{b}$ form the code book B.

For example, let $\underline{u} =(0, 1, 1, 0, 0, 0; 0)$. Then, $\underline{v} = (0,1,1,0,0,1,1,0)$ and further $\underline{h}^\perp = (0,0,0,0)$. Therefore, $t = 2$ and $\underline{b} = (a,-e,-e,e,e,-e,-e,d)$.

It can be shown that any vectors $\underline{u}$ whose entries $u_4, u_5, u_6$ are all zeros will lead to $t = 2$. In a further example, let $\underline{u}=(0, 1, 1, 0, 0, 0, 1)$. Then, $\underline{v}=(0, 1, 1, 0, 0, 1, 0, 1)$ and further $\underline{h}^\perp = (0, 1, 0, 0)$. Therefore, $t = 1$ and $\underline{b} = (a, -c, -c, c, c, -c, c, -c)$.

It can be shown that any vectors $\underline{u}$ in which at least one of entries $u_4, u_5, u_6$ is not zero will lead to $t =1$.

PAPR of the DS-CDMA System 300

Vectors $b$ that correspond to the case $t = 1$ are referred to as vectors of the first type and vectors $b$ that correspond to the case $t = 2$ vectors of the second type. It can be s hown that the number of vectors of the first type is $7 \cdot 16 = 112$ and the number of vectors of the second type is 16.

The power of a vector of the first type is $a^2 + 7c^2$. The power of a vector of the second type is $a + 6e^2 + d^2$. The total number of vectors is $2^7 = 128$. Hence, the average energy of a vector from the code book equals

$$E_{vector} = \frac{112(a^2 + 7c^2) + 16(a + 6e^2 + d^2)}{128}.$$

Using the Parseval rule of equation (7), the average energy per chip is expressed as follows:

$$E_B = \frac{1}{8} 8 E_{vector} = \frac{112(a^2 + 7c^2) + 16(a + 6e^2 + d^2)}{128}. \tag{10}$$

In order to maintain the average energy per chip in the DS-CDMA system 300 the same as in the conventional DS-CDMA system 100, the amplitudes e, c, and d must be selected so that $E_B = E_A$, where $E_A$ is defined in equation (8).

Consider the PAPR of the DS-CDMA system 300 of the present invention. It can be shown that for any vector $\underline{b}$ of the first type, the corresponding output vector $\underline{s} = \underline{b}H_8$ will have one and the same set of absolute values of entries:

$$\{|a + 3c|, |a - c|, |a - 5c|\}.$$

It is noted that the vectors $\underline{u}$ that produce vectors $\underline{b}$ of the first type belong to cosets of the first order Reed-Muller code with the coset leader of weight two. The same is true for vectors $\underline{b}$ of the second type. In this case, the set of absolute values of entries of the output vector $\underline{s} = \underline{b}H$ is expressed as follows:

$$\{|a + 6e - d|, |a + d|, |a - 2e - d|\}.$$

Thus, the PAPR of the DS-CDMA system 300 is expressed as follows:

$$PAPR_B = \frac{\max\{|a + 3c|^2, |a - c|^2, |a - 5c|^2, |a + 6e - d|, |a + d|, |a - 2e - d|\}}{\frac{112(a^2 + 7c^2) + 16(a + 6e^2 + d^2)}{128}}. \tag{11}$$

To obtain a system with a small PAPR, the amplitudes $d$, c, and e must be selected to provide $E_B = E_A$ and minimize expression (11).

In one exemplary solution of this optimization problem, the following amplitudes were obtained:

$$c = 0.6125123893 \cdot a, \ e = 0.611 \cdot a, \ d = 1.837572876 \cdot a.$$

It can be shown that under this choice, $E_B = E_A$ and PAPR=2.013.

Variations of the DS-CDMA System 300

In addition to a small PAPR, a small bit error probability is also desired. A decoding algorithm will be described in the next section. It is noted that for minimizing the bit error probability, different approaches are used for channels with low and with high signal to noise ratios (SNR). In a channel with a high signal to noise ratio, a code book with a large minimum distance will have smaller bit error probability. The minimum distance of code book $ß$ is defined as follows:

$$d(B) = \min\{\text{dist}(\underline{x}, \underline{y}) = (x_0 - y_0)^2 + (x_1 - y_1)^2 + \ldots + (x_7 - y_7)^2 : \underline{x}, \underline{y} \in B\}.$$

It is can be shown that vectors of the form

$$\begin{pmatrix} a, & e, & e, & e, & e, & e, & e, & -d \\ a, & -e, & -e, & e, & e, & -e, & -e, & d \end{pmatrix}$$

will have the minimum pairwise distance, say $d_1$, among all pairs of vectors of the first type. Similarly, the vectors of the following form:

$$\begin{pmatrix} a, & c, & c, & c, & c, & c, & -c, & -c \\ a, & c, & c, & c, & c, & -c, & -c, & c \end{pmatrix}$$

will have the minimum pairwise distance, say $d_2$, among all pairs of vectors of the second type.

Finally, the vectors of the folllowing form:

$$\begin{pmatrix} a, & e, & e, & e, & e, & e, & e, & -d \\ a, & c, & c, & c, & c, & c, & -c, & -c \end{pmatrix}$$

will have the minimum pairwise distance, say $d_3$, among all pairs of vectors one of which is a vector of the first type and another is the vector of the second type. As previously indicated, for achieving small bit error probability in a channel with large SNR, the minimum distance of the code book must be maximized. This can be done by changing values for the constant amplitudes $c, d,$ and e, which increases the PAPR of the system.

Assume that a *PAPR* equal to 2.2 is desired. It can be shown that the minimum of distances $d_2$ and $d_3$ will define the minimum distance of the c ode book, while the distance $d_1$ is always much larger than $d_2$ and $d_3$. Thus, an optimal choice of the constant amplitudes c, *d,* and e is one that provides $d_2 \approx d_3$ under the condition that $PAPR_B \approx 2.2$ and $E_A = E_B$.

For example, if c = 0.611617844 · *a, e* = 0.63 $d_3$ *a,* and *d* = 1.813520605 $d_3$ *a* are selected, then a DS-CDMA system is obtained with *PAPR* $\approx$ 2.2009 and $d1 \approx 2.992 \cdot a^2$, $d2 = 2.987 \cdot a^2$, $d3 = 3.1752 \cdot a^2$.

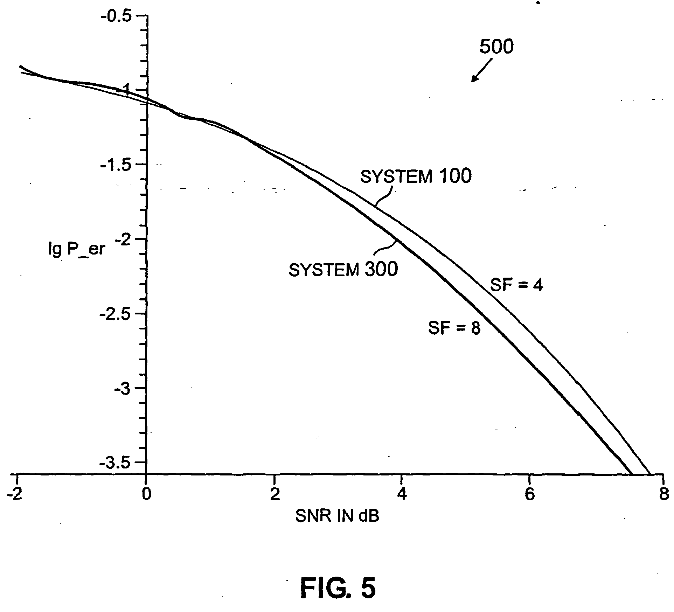

FIG. 5 is a plot 500 illustrating the relative decoding performance (bit error probability versus signal-to-noise ratio) of the conventional DS-CDMA system 100 and the DS-CDMA system 300 of the present invention, in the presence of an additive white Gaussian noisy (AWGN) channel. According to another aspect of the invention, two different code books are employed based on whether the channel exhibits low or high signal to noise ratios (SNR), distinguished by a specified threshold. Thus, to minimize the bit error probability, different approaches are used for channels with low and with high signal to noise ratios (SNR). In a channel with a high signal to noise ratio, a code book with a large minimum distance will have smaller bit error probability. For example, as shown in FIG. 5, for a SNR above 2, the codebook associated with the DS-CDMA system 300 of FIG. 3 will exhibit a better bit error probability.

Decoding for the DS-CDMA System 300

For reconstruction of the variable $b_0$ we use exactly the same procedure as in system *A.* Since in systems *B* and C we keep the same amplitude for signals transmitted in the 0th stream as in system *A* the probability of error remains also the same. For reconstruction information from other streams in systems *B* and C we can also use the same procedure of despreading as in system *A.* However, since signal amplitudes for streams 1,2,...,7 are lower than in system *A* the bit error probability will increase. For this reason, in addition to despreading, a posteriori probability (APP) decoding of the received vector can be used.

It is to be understood that the embodiments and variations shown and described herein are merely illustrative of the principles of this invention and that various modifications may be implemented by those skilled in the art without departing from the scope of the invention.

It is again assumed that a vector $\underline{b} = (b_0, b_1, ..., b_7)$. is transmitted. The output vector $\underline{s} = \sum_{i=0}^{7} b_i \underline{w}_i$ is transmitted through a noisy channel and the vector $\underline{x} = \underline{s} + \underline{z}$ is received. Without loss of generality, it is assumed that the channel is an additive white Gaussian noisy (AWGN) channel. In other words, it is assumed that the density function $f(z_i)$ of any element of the vector $\underline{z}$ can be expressed as:

$$f(z_i) = \frac{1}{\sqrt{2\pi\sigma^2}} e^{\frac{z_i^2}{2\sigma^2}} ,$$

where $\sigma$ depends on the SNR of a channel.

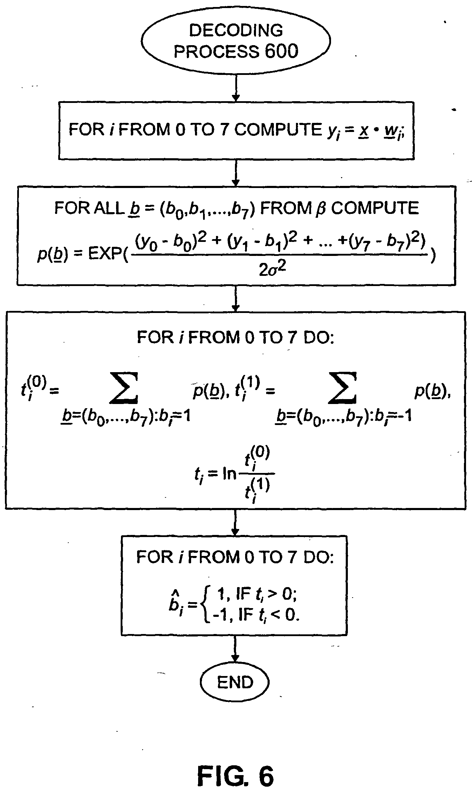

FIG. 6 is a flow chart describing an exemplary decoding process 600. As shown in FIG. 6, the exemplary decoding process 600 performs as follows:

1. For $i$ from 0 to 7 compute $y_i = \underline{x} \cdot w_i$;
2. For all $\underline{b} = (b_0, b_1, ..., b_7)$ from B compute

$$p(\underline{b}) = \exp(\frac{(y_0 - b_0)^2 + (y_1 - b_1)^2 + ... + (y_7 - b_7)^2)}{2\sigma^2})$$

3. For i from 0 to 7 do

$$t_i^{(0)} = \sum_{\underline{b}=(b_0,...,b_7):b_i=1} p(\underline{b}) ,$$

$$t_i^{(1)} = \sum_{\underline{b}=(b_0,...,b_7):b_i=-1} p(\underline{b}) ,$$

$$t_i = \ln \frac{t_i^{(0)}}{t_i^{(1)}}$$

4. For $i$ from 0 to 7 do

$$\hat{b}_i = \begin{cases} 1, & \text{if } t_i > 0; \\ -1, & \text{if } t_i < 0. \end{cases}$$

5. End.

Using standard arguments (see, e.g., L. R. Bahl et al., "Optimal Decoding of Linear Codes for Minimizing Symbol Error Rate," IEEE Trans. Inform. Theory, 20, 284-87 (1974)), it can be shown that:

$$t_i = \frac{\Pr(\text{sign}(b_i) = 1 | \underline{x})}{\Pr(\text{sign}(b_i) = -1 | \underline{x})} .$$

In other words, $t_i$ is the log likelihood ratio of the $i$th bit. The algorithm 600 requires about 1000 operations over real numbers.

It is to be understood that the embodiments and variations shown and described herein are merely illustrative of the principles of this invention and that various modifications may be implemented by those skilled in the art without departing from the scope and spirit of the invention.

**Claims**

1. A method for generating a code book for use in a CDMA system (300), said code book comprised of a plurality of vectors, said method comprising:

   selecting an amplitude and polarity value for each vector of said code book to provide a reduced peak-to-average power ratio for transmissions that include data transmissions comprising one or more data symbols, wherein each vector in said code book depends on transmitted user data by generating a vector v by multiplying said transmitted user data by a generator matrix and using said vector v in the formation of each of said vectors in said code book,
   wherein using said vector v in the formation of the vectors in said code book comprises generating a vector h by multiplying the vector v with a second generator matrix,
   wherein said selecting step comprises

      if the vector h is different from null

         assigning $b_0 = av_0$ and $b_i = cv_i$ for i = 1,...,7, to obtain a first type vector of said code book,

      else

         assigning $b_0 = av_0$, $b_i = ev_i$ for i = 1,...,6, and $b_7 = -dv_7$ to obtain a second type vector of said code book,

   wherein a, c, d, and e denote non-uniform amplitude values, $b_i$ denotes the i-th element of the vector of said code book and $v_i$ denotes the i-th element of the vector v.

2. The method of claim 1, wherein said CDMA system has a spreading factor of eight and eight distinct data streams.

3. The method of claim 2, wherein one of said data streams is varying slower than the remaining data streams and at least six of said data streams are employed to carry user information.

4. The method of claim 1, further comprising the steps of generating a first code book to be used under a first signal-to-noise ratio condition and generating a second code book to be used under a second signal-to-noise ratio condition.

5. The method of claim 1, further comprising:

   encoding a data stream based on the code book comprised of the plurality of vectors, each of said vectors having coefficient values that provide a reduced peak-to-average power ratio for transmissions that include data transmissions comprising one or more data symbols relative to a peak-to-average power ratio that would result if said vectors contained coefficient values of uniform magnitude.

6. The method of claim 5, further comprising the step of transmitting said encoded data stream.

7. The method of claim 5, further comprising the step of multiplying an encoded data stream by a corresponding spreading code.

8. The method of claim 5, wherein said encoded data stream is based on a first code book to be used under a first signal-to-noise ratio condition and a second code book to be used under a second signal-to-noise ratio condition.

9. The method of claim 1, wherein the generator matrix is a generator matrix of a single parity check code.

10. The method of claim 1, wherein the second generator matrix is a generator matrix of a first order Reed-Muller code.

11. The method of claim 1, wherein a, c, d, and e are selected such that the expression

$$E_B \approx \frac{1}{8} 8 E_{vector} \approx \frac{112(a^2 + 7c^2) + 16(a + 6e^2 + d^2)}{128}$$

equals

$$E_A = 4a^2$$

and minimize the expression

$$PAPR_B = \frac{max\{|a+3c|^2, |a-c|^2, |a-5c|^2, |a+6e-d|, |a+d|, |a-2e-d|\}}{\dfrac{112(a^2+7c^2)+16(a+6e^2+d^2)}{128}}.$$

12. A trnasmitter in a CDMA system (300), comprising: a plurality of multipliers (310), each of said multipliers multiplying an encoded data stream by a corresponding spreading code, wherein said encoded data stream depends on encoded transmitted user data and is based on a code book comprised of a plurality of vectors, each of said vectors having non-uniform amplitude values selected to provide a reduced peak-to-average power ratio for transmissions that include data transmissions comprising one or more data symbols, wherein each vector in said code book depends on transmitted user data by generating a vector v by multiplying said transmitted user data by a generator matrix and using said vector v in the formation of each of said vectors in said code book,

wherein the transmitter is configured to use said vector v in the formation of the vectors in said code book by generating a vector h by multiplying the vector v with a second generator matrix,

wherein the transmitter is configured

if the vector h is different from null

to assign $b_0 = av_0$ and $b_i = cv_i$ for i = 1,...,7, to obtain a first type vector of said code book,
else

to assign $b_0 = av_0$, $b_i = ev_i$ for i = 1,...,6, and $b_7 = -dv_7$ to obtain a second type vector of said code book,

wherein a, c, d, and e denote non-uniform amplitude values, $b_i$ denotes the i-th element of the vector of said code book and $v_i$ denotes the i-th element of the vector v; and
a combiner for aggregating an output of each of said plurality of multipliers for transmission.

**Patentansprüche**

1. Verfahren für das Generieren eines Codebuchs zur Verwendung in einem CDMA-System (300), wobei besagtes Codebuch eine Vielzahl von Vektoren umfasst, wobei besagtes Verfahren umfasst:

die Auswahl eines Amplituden- und eines Polaritätswerts für jeden Vektor besagten Codebuchs, um ein verringertes Verhältnis von Spitzen- zu Durchschnittsleistung für Übertragungen einschließlich Datenübertragungen mit einem oder mehreren Datensymbolen zur Verfügung zu stellen, wobei jeder Vektor in besagtem Codebuch von übertragenen Benutzerdaten abhängt, indem ein Vektor v durch das Multiplizieren besagter übertragener Benutzerdaten mit einer Generatormatrix generiert wird, wobei besagter Vektor v bei der Bildung eines jeden der besagten Vektoren in besagtem Codebuch verwendet wird und wobei die Verwendung besagten Vektors v bei der Bildung der Vektoren in besagtem Codebuch das Generieren eines Vektors h durch Multiplizieren des Vektors v mit einer zweiten Generatormatrix umfasst,
wobei der Auswahlschritt umfasst:

wenn der Vektor h ungleich Null ist

das Zuweisen von $b_0 = av_0$ und $b_i = cv_i$, für i = 1,...,7, zwecks Erhalts eines Vektors ersten Typs besagten Codebuchs,

und weiterhin

das Zuweisen von $b_0 = av_0$, $b_i = ev_i$ für i =1,...,6, und $b_7 = -dv_7$ zwecks Erhalts eines Vektors zweiten Typs besagten Codebuchs,

wobei a, c, d, und e nicht-uniforme Amplitudenwerte bezeichnen, $_{bi}$ das i-te Element des Vektors besagten Codebuchs und $v_i$ das i-te Element des Vektors v.

2. Das Verfahren nach Anspruch 1, wobei besagtes CDMA-System einen Spreizfaktor von acht sowie acht unterschiedliche Datenströme hat.

3. Das Verfahren nach Anspruch 2, wobei einer der besagten Datenströme langsamer als die übrigen Datenströme variiert und mindestens sechs der besagten Datenströme für das Transportieren von Benutzerinformationen verwendet werden.

4. Das Verfahren nach Anspruch 1, weiterhin die Schritte des Generierens eines ersten Codebuchs umfassend, das unter einer ersten Signalrauschabstands-Bedingung zu verwenden ist, und des Generierens eines zweiten Codebuchs, das unter einer zweiten Signalrauschabstands-Bedingung zu verwenden ist.

5. Das Verfahren nach Anspruch 1, weiterhin umfassend:

das Codieren eines Datenstroms auf der Grundlage des aus der Vielzahl von Vektoren bestehenden Codebuchs, wobei jeder der besagten Vektoren über Koeffizientenwerte verfügt, die ein verringertes Verhältnis von Spitzen- zu Durchschnittsleistung für Übertragungen bereitstellen, die Datenübertragungen beinhalten, die ein oder mehrere Datensymbole umfassen, die sich auf ein solches Verhältnis von Spitzen- zu Durchschnittsleistung beziehen, das sich dann ergeben würde, wenn besagte Vektoren Koeffizientenwerte von einheitlicher Größe enthalten würden.

6. Das Verfahren nach Anspruch 5, weiterhin den Schritt des Übermittelns besagten codierten Datenstroms umfassend.

7. Das Verfahren nach Anspruch 5, weiterhin den Schritt des Vervielfachens eines codierten Datenstroms durch einen entsprechenden Spreizcode umfassend.

8. Das Verfahren nach Anspruch 5, wobei besagter codierter Datenstrom auf einem ersten Codebuch beruht, das unter einer ersten Signalrauschabstands-Bedingung zu verwenden ist, und auf einem zweiten Codebuch, das unter einer zweiten Signalrauschabstands-Bedingung zu verwenden ist.

9. Das Verfahren nach Anspruch 1, wobei die Generatormatrix eine Generatormatrix eines einzigen Parity-Check-Codes ist.

10. Das Verfahren nach Anspruch 1, wobei die zweite Generatormatrix eine Generatormatrix eines Reed-Müller-Codes erster Ordnung ist.

11. Das Verfahren nach Anspruch 1, wobei a, c, d, und e so gewählt werden, dass der Ausdruck

$$E_0 = \frac{1}{8} 8 E_{vector} = \frac{112(a^2 + 7c^2) + 16(a + 6c^2 + d^2)}{128}$$

gleich

$$E_A = 4a^2$$

und folgenden Ausdruck minimiert

$$PAPR_0 = \frac{\max\{|a+3d|^2, |a-c|^2, |a-5d|^2, |a+6e-d|, |a+d|, |a-2e-d|\}}{\dfrac{112(a^2+7c^2)+16(a+6e^2+d^2)}{128}}$$

**12.** Sender in einem CDMA-System (300), umfassend:

eine Vielzahl von Multiplikatoren (310), wobei jeder der besagten Multiplikatoren einen codierten Datenstrom mit einem entsprechenden Spreizcode multipliziert, wobei besagter codierter Datenstrom von codiert übertragenen Benutzerdaten abhängt und auf einem Codebuch basiert, das eine Vielzahl von Vektoren enthält, wobei jeder der besagten Vektoren nicht-uniforme Amplitudenwerte hat, die so ausgewählt sind, dass sie ein verringertes Verhältnis von Spitzen- zu Durchschnittsleistung für Übertragungen bereitstellen, die Datenübertragungen beinhalten, die ein oder mehrere Datensymbole umfassen, wobei jeder Vektor in besagtem Codebuch von übertragenen Benutzerdaten abhängt, indem ein Vektor durch das Multiplizieren besagter übertragener Benutzerdaten mit einer Generatormatrix generiert wird, wobei besagter Vektor v bei der Bildung eines jeden der besagten Vektoren in besagtem Codebuch verwendet wird,
wobei der Sender konfiguriert ist für die Benutzung besagten Vektors v bei der Bildung der Vektoren in besagtem Codebuch, was durch das Generieren eines Vektors h durch Multiplikation des Vektors v mit einer zweiten Generatormatrix erfolgt,
wobei der Sender dafür konfiguriert ist, um dann,

wenn der Vektor h ungleich Null ist,

$b_0 = av_0$ und $b_i=cv_i$, für $i = 1,...,7$ zuzuweisen, um einen Vektor ersten Typs besagten Codebuchs zu erhalten,

und weiterhin

$b_0 = av_0$, $b_i=ev_i$ für $i =1,...,6$, und $b_7 = -dv_7$ zuzuweisen, um einen Vektor zweiten Typs besagten Codebuchs zu erhalten,

wobei a, c, d, und e nicht-uniforme Amplitudenwerte bezeichnen, $b_i$ das i-te Element des Vektors besagten Codebuchs und vi das i-te Element des Vektors v; und
einen Verknüpfer zum Aggregieren eines Outputs eines jeden der besagten Vielzahl von Multiplikatoren für die Übertragung.

## Revendications

**1.** Procédé pour générer un livre de codes destiné à être utilisé dans un système CDMA (300), ledit livre de codes étant composé d'une pluralité de vecteurs, ledit procédé comprenant l'étape suivante :

sélectionner une valeur d'amplitude et de polarité pour chaque vecteur dudit livre de codes pour fournir un rapport puissance de crête sur puissance moyenne réduit pour des transmissions qui incluent des transmissions de données comprenant un ou plusieurs symboles de données, chaque vecteur dans ledit livre de codes dépendant de données d'utilisateur transmises en générant un vecteur v en multipliant lesdites données d'utilisateur transmises par une matrice génératrice et en utilisant ledit vecteur v dans la formation de chacun desdits vecteurs dans ledit livre de codes, l'utilisation dudit vecteur v dans la formation des vecteurs dans ledit livre de codes comprenant la génération d'un vecteur h en multipliant le vecteur v avec une seconde matrice génératrice, dans lequel ladite étape de sélection comprend

si le vecteur h est différent de nul

assigner $b_0=av_0$, $b_i=cv_i$ pour $i=1, ..., 7$, pour obtenir un premier type de vecteur dudit livre de codes,

sinon

assigner $b_0=av_0$, $b_i=ev_i$ pour $i=1, ..., 6$, et $b_7=-dv_7$ pour obtenir un second type de vecteur dudit livre de codes,

où a, c, d, et e désignent des valeurs d'amplitude non uniformes, $b_i$ désigne l'i-ième élément du vecteur dudit livre de codes et $v_i$ désigne l'i-ième élément du vecteur v.

2. Procédé selon la revendication 1, dans lequel ledit système CDMA a un facteur d'étalement de huit et huit flux de données distincts.

3. Procédé selon la revendication 2, dans lequel un desdits flux de données varie plus lentement que les flux de données restants et au moins six desdits flux de données sont employés pour acheminer des informations d'utilisateur.

4. Procédé selon la revendication 1, comprenant en outre les étapes de génération d'un premier livre de codes devant être utilisé dans une première condition de rapport signal sur bruit et de génération d'un second livre de codes devant être utilisé dans une seconde condition de rapport signal sur bruit.

5. Procédé selon la revendication 1, comprenant en outre l'étape suivante :

encoder un flux de données sur la base du livre de codes composé de la pluralité de vecteurs, chacun desdits vecteurs ayant des valeurs de coefficient qui fournissent un rapport puissance de crête sur puissance moyenne réduit pour des transmissions qui incluent des transmissions de données comprenant un ou plusieurs symboles de données relatifs à un rapport puissance de crête sur puissance moyenne qui résulterait si lesdits vecteurs contenaient des valeurs de coefficient de grandeur uniforme.

6. Procédé selon la revendication 5, comprenant en outre l'étape de transmission dudit flux de données encodé.

7. Procédé selon la revendication 5, comprenant en outre l'étape de multiplication d'un flux de données encodé par un code d'étalement correspondant.

8. Procédé selon la revendication 5, dans lequel ledit flux de données encodé est basé sur un premier livre de codes devant être utilisé dans une première condition de rapport signal sur bruit et un second livre de codes devant être utilisé dans une seconde condition de rapport signal sur bruit.

9. Procédé selon la revendication 1, dans lequel la matrice génératrice est une matrice génératrice d'un code de contrôle de parité unique.

10. Procédé selon la revendication 1, dans lequel la seconde matrice génératrice est une matrice génératrice d'un code de Reed-Muller de premier ordre.

11. Procédé selon la revendication 1, dans lequel a, c, d, et e sont sélectionnés de sorte que l'expression

$$E_B = \frac{1}{8} 8 E_{vector} = \frac{112(a^2 + 7c^2) + 16(a + 6e^2 + d^2)}{128}$$

égale

$$E_A = 4a^2$$

et minimise l'expression

$$PAPR_B = \frac{max\{|a+3d|^2, |a-c|^2, |a-5c|^2, |a+6e-d|, |a+d|, |a-2e-d|\}}{\frac{112(a^2+7c^2)+16(a+6e^2+d^2)}{128}}$$

**12.** Emetteur dans un système CDMA (300), comprenant :

une pluralité de multiplieurs (310), chacun desdits multiplieurs multipliant un flux de données encodé par un code d'étalement correspondant, ledit flux de données encodé dépendant de données d'utilisateur transmises et étant basé sur un livre de codes composé d'une pluralité de vecteurs, chacun desdits vecteurs ayant des valeurs d'amplitude non uniformes sélectionnées pour fournir un rapport puissance de crête sur puissance moyenne réduit pour des transmissions qui incluent des transmissions de données comprenant un ou plusieurs symboles de données, chaque vecteur dans ledit livre de codes dépendant de données d'utilisateur transmises en générant un vecteur v en multipliant lesdites données d'utilisateur transmises par une matrice génératrice et en utilisant ledit vecteur v dans la formation de chacun desdits vecteurs dans ledit livre de codes,

l'émetteur étant configuré pour utiliser ledit vecteur v dans la formation des vecteurs dans ledit livre de codes en générant un vecteur h en multipliant le vecteur v avec une seconde matrice génératrice,

l'émetteur étant configuré

si le vecteur h est différent de nul

pour assigner $b_0 = av_0$, $b_i = cv_i$ pour i=1, ..., 7, pour obtenir un premier type de vecteur dudit livre de codes,

sinon

pour assigner $b_0 = av_0$, $b_i = ev_i$ pour i=1, ..., 6, et $b_7 = -dv_7$ pour obtenir un second type de vecteur dudit livre de codes,

où a, c, d, et e désignent des valeurs d'amplitude non uniformes, $b_i$ désigne l'i-ième élément du vecteur dudit livre de codes et $v_i$ désigne l'i-ième élément du vecteur v ; et

un combineur pour agréger une sortie de chacun de ladite pluralité de multiplieurs pour la transmission.

100

$\underline{c}_0$

110-1

$a_0$

$\underline{c}_1$

110-2

$a_1$

$\underline{c}_2$

110-3

$a_2$

Σ

120

$\underline{s}$

$\underline{c}_3$

110-4

$a_3$

# FIG. 1
## (PRIOR ART)

200

```
(  -a,  -a,  -a,  -a  );
(  -a,  -a,  -a,   a  );
(  -a,  -a,   a,  -a  );
(  -a,  -a,   a,   a  );
(  -a,   a,  -a,  -a  );
(  -a,   a,  -a,   a  );
(  -a,   a,   a,  -a  );
(  -a,   a,   a,   a  );
(   a,  -a,  -a,  -a  );
(   a,  -a,  -a,   a  );
(   a,  -a,   a,  -a  );
(   a,  -a,   a,   a  );
(   a,   a,  -a,  -a  );
(   a,   a,  -a,   a  );
(   a,   a,   a,  -a  );
(   a,   a,   a,   a  );
```

## FIG. 2
## (PRIOR ART)

FIG. 3

**FIG. 4**

**FIG. 5**

**DECODING PROCESS 600**

FOR $i$ FROM 0 TO 7 COMPUTE $y_i = \underline{x} \cdot \underline{w}_i$;

FOR ALL $\underline{b} = (b_0, b_1, ..., b_7)$ FROM $\beta$ COMPUTE

$$p(\underline{b}) = \mathrm{EXP}(\frac{(y_0 - b_0)^2 + (y_1 - b_1)^2 + ... + (y_7 - b_7)^2)}{2\sigma^2})$$

FOR $i$ FROM 0 TO 7 DO:

$$t_i^{(0)} = \sum_{\underline{b}=(b_0,...,b_7):b_i=1} p(\underline{b}), \quad t_i^{(1)} = \sum_{\underline{b}=(b_0,...,b_7):b_i=-1} p(\underline{b}),$$

$$t_i = \ln\frac{t_i^{(0)}}{t_i^{(1)}}$$

FOR $i$ FROM 0 TO 7 DO:

$$\hat{b}_i = \begin{cases} 1, & \text{IF } t_i > 0; \\ -1, & \text{IF } t_i < 0. \end{cases}$$

**END**

## FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6680978 B
- EP 1359678 A1
- US 6680978 B1
- US 20020150068 A1


**Non-patent literature cited in the description**

- **C.D. MURPHY.** High Order Optimum Hexagonal Constellations. *11th Annual IEEE Symposium on Personal, Indoor and Mobile Radio Communications (PIMRC) 2000,* September 2000
- High-order optimum hexagonal constellations. **MURPHY C. D.** PERSONAL, INDOOR AND MOBILE RADIO COMMUNICATIONS, 2000. PIMRC 2000. THE 11TH IEEE INTERNATIONAL SYMPOSIUM. IEEE, 18 September 2000, vol. 1, 143-146
- Peak-to-average power ratio analysis in multicode cdma. **SATHANANTHAN K. et al.** VTC 2002-FALL 2002 IEEE 56TH. VEHICULAR TECHNOLOGY CONFERENCE PROCEEDINGS. IEEE, 24 September 2002, vol. 1, 500-504
- **T. OTTOSSON.** Precoding for Minimization of Envelope Variations in Multicode DS-CDMA Systems. *Wireless Personal Communications,* 2000, vol. 13, 57-78
- **F.J. MACWILLIAMS ; N.J.A. SLOANE.** *The Theory of Error-Correcting Codes,* 1977
- **F. J. MACWILLIAMS ; N. J. SLOANE.** *The theory of Error-Correcting Codes,* 1977
- **L. R. BAHL et al.** Optimal Decoding of Linear Codes for Minimizing Symbol Error Rate. *IEEE Trans. Inform. Theory,* 1974, vol. 20, 284-87